# EUROPÄISCHE PATENTANMELDUNG

(11) **EP 4 044 270 A1**
(43) Veröffentlichungstag der Anmeldung: **17.08.2022**
(21) Anmeldenummer: 22156108.7
(22) Anmeldetag: 10.02.2022
(51) Int. Cl.: H01M 4/00, H01M 8/1004

(54) **AUF NANO-FLOCKEN BASIERENDE BESCHICHTUNG FÜR EINE IN EINER GALVANISCHEN ZELLE VERWENDETE MEMBRAN**

(30) Priorität: 10.02.2021 DE 102021103116
(71) Anmelder: AMO GmbH, 52074 Aachen (DE)
(72) Erfinder: Lemme, Max, 51069 Köln (DE); Plachetka, Ulrich, 41199 Mönchengladbach (DE); Ruhkopf, Jasper, 52074 Aachen (DE); Pasdag, Oliver, 46147 Oberhausen (DE); Wartmann, Jens, 46242 Bottrop (DE)
(74) Vertreter: Patentanwälte Bauer Vorberg Kayser

(57) **Zusammenfassung**

Die vorliegende Erfindung betrifft eine Membran zur Verwendung in einer galvanischen Zelle (1), mit einem Membrankörper (2), der eine erste Membranoberfläche (11) und einer der ersten Membranoberfläche (11) gegenüberliegende zweite Membranoberfläche (12) aufweist.

Um bei einer solchen Membran eine Reduktion von Crossover-Effekten zu ermöglichen, wird erfindungsgemäß vorgeschlagen, dass auf der ersten und/oder zweiten Membranoberfläche (11, 12) eine auf Nano-Flocken (3) basierende Beschichtung (4) aufgebracht ist.

Ferner betrifft die Erfindung eine galvanische Zelle mit einer solchen Membran, sowie ein Herstellungsverfahren für eine derartige Membran.

## Beschreibung

Die vorliegende Erfindung betrifft eine Membran zur Verwendung in einer galvanischen Zelle, mit einem Membrankörper, der eine erste Membranoberfläche und eine der ersten Membranoberfläche gegenüberliegende zweite Membranoberfläche aufweist. Ferner betrifft die Erfindung eine galvanische Zelle, umfassend eine Anode, eine Kathode und eine zwischen Anode und Kathode angeordnete und nach der Erfindung ausgebildete Membran. Zuletzt betrifft die vorliegende Erfindung ein Verfahren zur Herstellung einer erfindungsgemäßen Membran.

Galvanische Zellen sind allgemein bekannt und dienen der Erzeugung von elektrischer Energie. Bei galvanischen Zellen kann zwischen Primär-, Sekundär- und Tertiärzellen unterschieden werden. Primärzellen werden häufig als Batterien und Sekundärzellen als Akkumulatoren bezeichnet. Tertiärzellen werden in Form von Brennstoffzellen bereitgestellt.

Wie beispielsweise in der DE 100 07 654 A1 beschrieben, weist eine Brennstoffzelle in der Regel Elektroden (Kathode und Anode) und einen zwischen den Elektroden angeordneten Elektrolyten auf. Der Elektrolyt umfasst typischerweise eine Membran. Unter Bezugnahme auf die allgemein bekannte Methanol-Brennstoffzelle, wird Methanol als Brennstoff in einen die Anode umgebenden Anodenraum eingespeist. Auf der Kathodenseite wird Sauerstoff oder Luft als Oxidationsmittel zugeführt. Mittels eines geeigneten Katalysators wird Methanol an der Anode umgesetzt, insbesondere zu Protonen (Wasserstoffionen, H⁺-Ionen oder in anderer Schreibweise auch H₃O⁺ Ionen). Die Protonen passieren die Membran und bilden an der Kathode mit den dort bereitgestellten Sauerstoff-Ionen Wasser. Dabei werden Elektronen freigesetzt und somit elektrische Energie erzeugt. Die in einer solchen Brennstoffzelle (aber auch in anderweitigen galvanischen Zellen) einsetzbaren Membranen werden u.a. als Protonenaustausch-Membranen bezeichnet.

Protonenaustausch-Membranen (PEMs) werden somit zur Separation zweier elektrochemischer Reaktionskammern eingesetzt (Kathodenraum, Anodenraum). Die Grundidee liegt dabei in einer möglichst vollständigen Sperrwirkung betreffend eine Molekül- bzw. Ionenmigration (bezogen auf die in die Reaktionskammern eingebrachten bzw. dort erzeugten Stoffe) zwischen den Reaktionskammern einerseits, und dem Zulassen einer Protonenmigration vom Anodenraum in Richtung des Kathodenraums andererseits.

Eine bekannte Protonenaustauschmembran betrifft eine auf einem PFSA (Perfluorsulfonsäure) Copolymer basierende Membran, vertrieben unter dem Handelsnamen Nafion. Dabei handelt es sich um ein sulfoniertes Tetrafluorethylen -basiertes Copolymer. Derartige Protonenaustauschmembranen zeichnen sich durch eine hohe Protonenleitfähigkeit (Durchlässigkeit) aus und weisen eine ausgezeichnete mechanische und chemische Stabilität auf, einem wesentlichen Kriterium für eine lange Lebensdauer der Brennstoffzelle. Nachteilig ist bei derartigen Membranen jedoch, dass sie keine vollständige Sperrwirkung für bestimmte Moleküle oder Ionen ermöglichen. In Bezug auf o.g. Brennstoffzellen sind Nafion-Membranen (ungewünschter Weise) bis zu einem bestimmten Maß durchlässig für Stoffe wie Methanol, Wasserstoff, gleichsam auch für bestimmte Ionen. Ein solcher ungewünschter Stoff- oder Ionentransfer von einer Reaktionskammer in die andere, wird als "Crossover" bezeichnet und kann zu parasitären (d.h. ungewünschten) chemischen Reaktionen führen, welche die Lebensdauer und den Wirkungsgrad der Brennstoffzelle maßgeblich reduzieren können.

Entsprechend ist die Reduktion bzw. Verhinderung der genannten Crossover-Effekte ein vordergründiges Ziel aktueller Membranforschung. Im Schrifttum wurden bereits unterschiedliche Ansätze zur Reduktion von Crossover-Effekten beschrieben.

In einem ersten Ansatz wurde dabei erkannt, dass die Verwendung von PFSA-Membranen größerer Schichtdicke Crossover-Effekte reduzieren kann. Nachteilig ist dabei jedoch eine damit einhergehende verringerte Protonenleitfähigkeit (bzw. Protonendurchlässigkeit). Gleichsam wurden unterschiedliche Membranmaterialien mit Blick auf die vorgenannten Crossover Effekte untersucht, beispielsweise Polymere wie Polystyrol-Sulfonsäure (PSSA), sulfoniertes Polyimid (PI) oder sulfoniertes Polyether-Ether-Kethon (s-PEEK). Mit diesen Materialien konnte jedoch bisher in Bezug auf die vorgenannten Kriterien keine Verbesserung im Vergleich zu Nafion erzielt werden. Weiterhin wurden auf Nafion - basierende Verbundmaterialien als mögliche PEM Materialien mit Blick auf eine Crossover-Reduktion untersucht. Beispielsweise wurden unterschiedliche Füllstoffe wie Tone, Lehme, Graphen-Oxid und anderweitige zweidimensionale (2D) Materialien wie Bornitrid (h-BN) oder MXene (anorganische 2D Materialien) in eine Nafion-Matrix eingebettet. Zwar führen derartige Verbundmaterialien zu einer Reduktion von Crossover-Effekten, die Fertigung solcher Materialien gestaltet sich jedoch bisher als äußerst aufwendig. Entsprechend eignen sich derartige Materialien zum jetzigen Zeitpunkt nicht für eine kommerzielle Verwendung. Membranen aus Graphen-Oxid als Vollmaterial (gefertigt z.B. im Wege einer Vakuum-Filtration) reduzieren Crossover-Effekte im Vergleich zu Nafion-Membranen, jedoch limitiert auch hier die (zeit)-aufwendige Fertigung eine kommerzielle Verwendung. Auch wurden bereits Brennstoffzell-Elektroden unmittelbar mit Graphen-Oxid beschichtet (als Ersatz zu einer zwischen den Elektroden angeordneten PEM). Damit konnte zwar eine ausreichende Protonenleitfähigkeit bereitgestellt werden, die unerwünschten Crossover-Effekte konnten im Vergleich zu einer Nafion-Referenz hingegen nicht reduziert werden. Eine weitere bekannte Entwicklung betraf die Applizierung einer vernetzten sulfonierten Graphen-Oxid Beschichtung auf einer Nafion PEM als zusätzlicher Barriereschicht, womit die Permeabilität für einen Methanol-Crossover reduziert werden konnte. Nachteilig war dabei jedoch eine reduzierte Protonenleitfähigkeit.

Zusammengefasst lässt sich bezüglich der aus dem Stand der Technik bekannten Membranentwicklungen festhalten, dass bei den genannten Varianten zwar die Performance hinsichtlich der Protonenleitfähigkeit der unerwünschten Crossover-Effekte jeweils für sich genommen verbessert werden konnte. Bisher entbehrt der Stand der Technik jedoch eine Membran-Lösung mit einer Performance-Verbesserung sowohl betreffend die Protonenleitfähigkeit als auch die Crossover-Effekte.

Entsprechend liegt der vorliegenden Erfindung die **Aufgabe** zugrunde, eine Membran zur Verwendung in einer galvanischen Zelle bereitzustellen, die im Vergleich zum Stand der Technik eine Reduktion von Crossover-Effekten ermöglicht.

Zur Lösung dieser Aufgabe wird eine Membran mit den Merkmalen des Patentanspruchs 1 vorgeschlagen.

Ferner liegt der vorliegenden Erfindung die **Aufgabe** zugrunde, eine galvanische Zelle bereitzustellen, die im Vergleich zu galvanischen Zellen gleicher Gattung eine verbesserte Leistungsfähigkeit aufweist.

Zur Lösung dieser Aufgabe wird eine galvanische Zelle mit den Merkmalen des Patentanspruchs 10 vorgeschlagen.

Zuletzt liegt der vorliegenden Erfindung die **Aufgabe** zugrunde, ein Verfahren bereitzustellen, mit welchem eine nach der Erfindung ausgebildete Membran auch im Serienmaßstab herstellbar ist. Zur Lösung dieser Aufgabe wird ein Verfahren mit den Merkmalen des Patentanspruchs 12 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich. Auch können die im Zusammenhang der erfindungsgemäßen Membran beschriebenen Merkmale vorteilhafte Ausgestaltungen des erfindungsgemäßen Verfahrens sein und umgekehrt. Gleiches gilt für die erfindungsgemäße galvanische Zelle.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Wie erwähnt, betrifft die vorliegende Erfindung zunächst eine Membran zur Verwendung in einer galvanischen Zelle, mit einem Membrankörper, der eine erste Membranoberfläche und eine der ersten Membranoberfläche gegenüberliegende zweite Membranoberfläche aufweist. Die Membran zeichnet sich erfindungsgemäß dadurch aus, dass auf der ersten und/oder zweiten Membranoberfläche eine auf Nano-Flocken basierende Beschichtung aufgebracht ist.

Unter einer galvanischen Zelle ist im Sinne der Erfindung vornehmlich eine Brennstoffzelle (eine sog. tertiäre galvanischen Zelle) zu verstehen. Besondere Eignung erfährt eine erfindungsgemäße Membran für eine Applikation in einer Polymerelektrolytbrennstoffzelle (PEMFC). Die Membran kann bei sämtlichen PEMFC-Typen eingesetzt werden, beispielsweise auch bei Methanol-Brennstoffzellen (DMFC = Direct Methanol Fuel Cell). Nicht ausgeschlossen ist jedoch auch ein Einsatz bei einer primären oder sekundären galvanischen Zelle, also einer Batterie oder einem Akkumulator.

Die Membran trennt dabei die in der galvanischen Zelle angeordneten (gegenpoligen) Elektroden, also die Anode und Kathode. Dabei kann die Membran auch einen die Anode umgebenden oder einen an die Anode angrenzenden Anodenraum von einem die Kathode umgebenden oder einem an die Kathode angrenzenden Kathodenraum in räumlicher Hinsicht trennen. Die Membran ist vorzugsweise semipermeabel.

Der genannte Membrankörper kann als Flachkörper ausgebildet sein. Dies meint, dass der Membrankörper in einer zweidimensionalen Erstreckungsebene größere Abmessungen aufweist als in einer senkrecht zu dieser Erstreckungsebene verlaufenden Richtung. Beispielsweise kann der Membrankörper in Form einer ein- oder mehrlagigen Folie ausgebildet sein, wobei die Folie biegsam und aufrollbar sein kann. Bei Ausbildung des Membrankörpers in Form einer Folie ist unter der ersten Membranoberfläche eine erste Folienseite und unter einer zweiten Membranoberfläche die der ersten Folienseite gegenüberliegende Folienseite zu verstehen (z.B. also eine Vorder- und Rückseite). Auch eine Ausbildung des Membrankörpers in Form eines unbiegsamen Flachkörpers ist möglich. Ferner ist eine Ausgestaltung denkbar, wonach der Membrankörper einen biegsamen, aber nicht aufrollbaren Flachkörper bereitstellt. Der Membrankörper kann auf einem Trägersubstrat angeordnet sein, welches dazu dienen kann, den Membrankörper in einer galvanischen Zelle zu befestigen und/oder diesen zu stabilisieren. Das Trägersubstrat kann z.B. in Form eines Gitters ausgestaltet sein. Nebst einer Ausbildung des Membrankörpers als Flachkörper bzw. Folie kommen aber auch andere Grundformen (z.B. eine Quaderform) in Betracht. Auch kann der Membrankörper (unabhängig ob dieser als Flachkörper anzusehen ist oder nicht) in einer an die konkrete Anwendung angepassten Konturform ausgebildet (z.B. zugeschnitten, gestanzt) sein. Derartige Konturformen können eine Polygon-Form (z.B. Dreieckform, Viereckform etc.), eine Kreisform, eine Ellipsenform, eine Ovalform etc. betreffen. Auch ein Folien-Stack kann einen Membrankörper bereitstellen.

Unter "Nano-Flocken" sind im Rahmen der Erfindung insbesondere Flocken aus zwei-dimensionalen (2D) Materialien zu verstehen, wobei die Flocken laterale Größenabmessungen von Nanometern bis einigen Mikrometern und typischerweise 1 - 10 übereinander gelagerte Schichten eines 2D-Materials aufweisen. Unter zwei-dimensionalen Materialien sind Materialien (ggf. in (nano-)kristalliner Form) zu verstehen, die aus nur einer oder wenigen Lage(n) von Atomen oder Molekülen aufgebaut sind. Derartige 2D Materialien können allotrop oder in Form von 2D-Verbindungs Materialien vorliegen. Beispiele für allotrope 2D Materialien sind Graphen, Borophen, Gellenen, Germanen, Silicen oder Stanen. Beispielhaft genannte 2D-Verbindungs Materialien sind Graphan, Boronitren oder Germaniumphosphid. Im Rahmen der Erfindung sei Graphen Nano-Flocken als mit für die hier gegenständliche Applikation besonderen Vorteilen behaftet herauszustellen.

Nano-Flocken können aus Sub-Strukturen wie Lagensystemen zusammengesetzt sein. Die Form, Größe, Dicke und bestimmte funktionale Eigenschaften von Nano-Flocken lassen sich in vorteilhafter Weise maßgeschneidert einstellen. Ferner lassen sich Nano-Flocken relativ einfach synthetisieren.

Unter einer "Beschichtung" kann im Rahmen der Erfindung eine flächige, abschnittsweise, partielle, punktuelle oder anderweitige Beaufschlagung der ersten und/oder zweiten Membranoberfläche mit der auf Nano-Flocken basierenden Beschichtung zu verstehen sein. Eine "flächige" Beaufschlagung schließt hierbei in der Natur der Beschichtung liegende Abstände oder Lücken zwischen einzelnen Nano-Flocken ein, denn gerade eine maßgeschneiderte Bereitstellung dieser Lücken in einer vorgegebenen Größendimension, kann gegebenenfalls eine selektive Erhöhung der Protonenleitfähigkeit (Protonendurchlässigkeit durch die Lücken) bereitstellen. Insbesondere wird jedoch ein Durchtritt anderer Moleküle oder Ionen (durch die genannten Lücken) verhindert bzw. erschwert. Die auf die erste und/oder zweite Membranoberfläche aufgebrachten Nano-Flocken können teilweise überlappen. Ferner können die Nano-Flocken in geordneten Mustern oder ungeordnet auf der ersten und/oder zweiten Membranoberfläche aufgebracht sein. Eine Beschichtung im Sinne der Erfindung kann als eine einlagige Beschichtung mit Nano-Flocken oder eine mehrlagige Beschichtung mit mehreren übereinander angeordneten Nano-Flocken Lagen ausgebildet sein. Sind mehrere Lagen von Nano-Flocken auf der ersten und/oder zweiten Membranoberfläche aufgebracht, so können die den jeweiligen Lagen zugeordneten Nano-Flocken lagenweise unterschiedliche Eigenschaften (z.B. Größenabmessungen, Formen etc.) aufweisen. Auch lagenbezogen können die Nano-Flocken eine unterschiedliche Ordnung aufweisen, beispielsweise können die Nano-Flocken in einer Lage in einem Muster (also geordnet) angeordnet sein, in einer weiteren Lage ungeordnet etc.

Wie im Terminus der "Nano-Flocken basierenden Beschichtung" zum Ausdruck kommend, kann die Beschichtung noch weitere Bestandteile umfassen, basiert jedoch auf Nano-Flocken. Unter der Bezeichnung "basierend" kann zu verstehen sein, dass die Nano-Flocken den mengenmäßig größten Anteil der Beschichtung ausbilden, z.B. bezogen auf einen Gewichtsanteil oder einen Volumenanteil an der Beschichtung. Alternativ oder zusätzlich kann der Terminus "basierend" darauf hindeuten, dass die Nano-Flocken für die Funktion der Beschichtung wesentlich sind, und etwaigen weiteren Bestandteile lediglich die Funktion eines Additivs beiwohnt (z.B. eines Fließmittels, Trennmittels, Lösungsmittels oder dergleichen).

Die Beschichtung kann beispielsweise in Form einer Dispersion auf die erste und/oder zweite Membranoberfläche aufgebracht werden. Unter einer "Dispersion" ist ein Gemisch aus mehreren Stoffen (z.B. zwei Stoffen) zu verstehen, die ineinander unlöslich oder nur geringfügig löslich sind. Im Kontext der Erfindung kann unter einer Dispersion zu verstehen sein, dass Nano-Flocken in einem (z.B. flüssigen oder zähflüssigen) Dispersionsmittel verteilt vorliegen. Das Dispersionsmittel kann entweder ebenfalls einen Teil der Beschichtung bilden (und z.B. im Anschluss an die Beaufschlagung auf der Membranoberfläche aushärten, trocknen oder polymerisieren) oder sich im Anschluss an die Beaufschlagung auf der Membranoberfläche verflüchtigen (z.B. Verdampfen). Das Dispersionsmittel kann beispielsweise Wasser sein. Die Beschichtung kann Nano-Flocken eines bestimmten Materials mit ein und denselben Eigenschaften umfassen, gleichsam aber auch Nano-Flocken unterschiedlicher Materialien. Dabei können Nano-Flocken unterschiedlicher Materialien in ein und derselben Lage oder in unterschiedlichen Lagen der Beschichtung angeordnet sein. Weiterhin kann die Beschichtung in Form einer verwirbelten Suspension auf die erste und/oder zweite Membranoberfläche aufgebracht werden. Unter einer Suspension von Nano-Flocken ist zu verstehen, dass sich die Nano-Flocken in einem Suspensionsmittel (z.B. einer Flüssigkeit wie Wasser) im Ruhezustand absetzen (und z.B. einen Bodensatz bilden). Um die Nano-Flocken im Suspensionsmittel zu verteilen können die Nano-Flocken aufgewirbelt werden, z.B. durch Rühren, Schütteln etc. Sodann kann die verwirbelte Suspension auf die erste und/oder zweite Membranoberfläche aufgebracht werden.

Weitere vorteilhafte Ausgestaltungen einer erfindungsgemäßen Membran ergeben sich aus den in den Unteransprüchen angegebenen, sowie den nachfolgend beschriebenen Merkmalen. Auch die in den Unteransprüchen angegebenen Merkmale seien nachfolgend beschrieben. Betont sei an dieser Stelle, dass die nachfolgend in Bezug zu einer erfindungsgemäßen Membran beschriebenen Merkmale ohne weiteres auch vorteilhafte Ausgestaltungsmerkmale einer erfindungsgemäßen galvanischen Zelle und/oder eines erfindungsgemäßen Verfahrens sein können. Um Wiederholungen zu vermeiden, seien die in Rede stehenden Merkmale nachfolgend nur in Bezug zu der erfindungsgemäßen Membran beschrieben.

Nach einer ersten vorteilhaften Ausgestaltung der Erfindung kann bei einer erfindungsgemäßen Membran vorgesehen sein, dass die Beschichtung vollflächig oder bereichsweise auf die erste und/oder zweite Membranoberfläche aufgebracht ist. Bei einem vollflächigen Aufbringen der Beschichtung wird diese auf der gesamten ersten und/oder zweiten Membranoberfläche aufgebracht. Insbesondere bedeutet dies, dass beim Aufbringen der Beschichtung nicht bestimmte Abschnitte oder Bereiche der ersten und/oder zweiten Membranoberfläche vom Beschichtungsprozess ausgenommen werden, wie dies z.B. durch eine Maskierung, einen Schutzlack etc. ermöglicht wäre. Eine vollflächige Aufbringung der Beschichtung schließt jedoch nicht aus, dass die Beschichtung eine Porosität bzw. Durchlässigkeit für Teilchen eines bestimmten Durchmessers aufweist bzw. bestimmte Stellen nicht von Nano-Flocken bedeckt sind. Vielmehr betrifft die selektive Durchlässigkeit der Beschichtung für H⁺ Ionen (Protonen) bei gleichzeitiger Undurchlässigkeit der Beschichtung für andere Moleküle oder Ionen gerade die Grundidee der vorliegenden Erfindung. Unter einer vollflächigen Beschichtung ist also zu verstehen, dass die gesamte erste und/oder zweite Membranoberfläche einem Beschichtungsprozess unterzogen wurde und Nano-Flocken darauf abgeschieden wurden, unabhängig von einer Porosität oder dem Vorsehen gewünschter Lücken in der Beschichtung (zur Gewährleistung der H⁺ Ionen bzw. Protonendurchlässigkeit). Unter einer bereichsweisen Aufbringung der Beschichtung auf der ersten und/oder zweiten Membranoberfläche ist zu verstehen, dass nur ein bestimmter Bereich oder eine Mehrzahl von Bereichen der ersten und/oder zweiten Membranoberfläche einem Beschichtungsprozess unterzogen wird. Auf jene die beschichteten Bereiche umgebenden Bereiche bzw. die außerhalb der beschichteten Bereiche der ersten und/oder zweiten Membranoberfläche wird keine Beschichtung aufgebracht. Während des Beschichtungsprozesses können diese Bereiche z.B. maskiert oder abgedeckt werden. Auch kann vorgesehen sein, die Beschichtung während des Beschichtungsprozesses selektiv nur auf bestimmte (beim Betrieb in einer Brennstoffzelle für den Protonenaustausch maßgebliche) Bereiche zu applizieren. Beispielsweise kann vorgesehen sein, die erste und/oder zweite Membranoberfläche an vorgegebenen Bereichen nicht zu beschichten, um an diesen Bereichen beispielsweise eine Befestigung (z.B. ein Einspannen) in einer galvanischen Zelle oder einen Handhabungsbereich vorzusehen.

Nach einer weiteren vorteilhaften Ausgestaltung der Erfindung kann bei einer erfindungsgemäßen Membran vorgesehen sein, dass es sich bei den Nano-Flocken um 2D-Flocken handelt. Wie schon eingangs erläutert, können unter zweidimensionalen (2D) Materialien jene Materialien (ggf. in (nano-)kristalliner Form) zu verstehen sein, die aus nur einer oder wenigen Lage(n) von Atomen oder Molekülen aufgebaut sind. Mit "wenigen Lagen" kann beispielsweise eine Anzahl von zwei bis zehn Lagen gemeint sein. Derartige 2D Materialien können - wie ebenfalls eingangs beschrieben - allotrop oder in Form von 2D-Verbindungs Materialien vorliegen. Unter 2D-Nano-Flocken sind sich räumlich unregelmäßig erstreckende Körper zu verstehen, die mittlere Größen (bezogen auf ihren größten Durchmesser) vorzugsweise im Nanometerbereich aufweisen, beispielsweise im Bereich von 0,2 nm bis 500 µm, vorzugsweise von 1 nm bis 50 µm, weiter vorzugsweise von 1 bis 20 µm, und besonders vorzugsweise von 1 nm bis 100 nm aufweisen. Anstelle einer Flockenform kann die Beschichtung auch 2D Nanoteilchen in Blattform, Bandform, Käfigform, Stabform, Drahtform, Faserform, Säulenform, Plättchenform, Gewebeform, oder Gitterform umfassen. Auch kann die Beschichtungen 2D Nanoteilen in einer Mischung der vorgenannten Formen umfassen.

Nach einer weiteren vorteilhaften Ausgestaltung der Erfindung kann bei einer erfindungsgemäßen Membran vorgesehen sein, dass die Beschichtung eine oder mehrere Lagen umfasst. Dabei können auf der ersten und/oder zweiten Membranoberfläche jeweils eine oder mehrere Lagen angeordnet sein. Bei einer beidseitigen Beschichtung des Membrankörpers, d.h. bei Aufbringen der Beschichtung auf der ersten und der zweiten Membranoberfläche, kann auf beiden Membranoberflächen die gleiche Anzahl von Lagen aufgebracht sein. Gleichsam kann auch eine unterschiedliche Anzahl an Lagen auf der ersten und zweiten Membranoberfläche aufgebracht sein. Die jeweiligen Lagen können auf der jeweiligen Membranoberfläche insbesondere sequenziell, d.h. nacheinander, aufgebracht werden. Vorgesehen sein kann dabei, dass nach dem Aufbringen einer Beschichtungs-Lage zunächst eine Trocknung oder Aushärtung der aufgebrachten Lage erfolgt, bevor eine weitere Lage auf die vorangehende Lage aufgebracht wird. Werden sowohl die erste als auch die zweite Membranoberfläche mit einer Beschichtung bzw. Beschichtungs-Lagen beaufschlagt, so kann die Beschichtung beider Membranoberflächen nacheinander oder zeitgleich erfolgen. Bei einer bereichsweisen Beschichtung der ersten und/oder zweiten Membranoberfläche kann für unterschiedliche Bereiche einer jeweiligen Membranoberfläche die gleiche oder eine unterschiedliche Anzahl von Beschichtungs-Lagen vorgesehen sein. Bei einer beidseitigen Beschichtung des Membrankörpers, also einer Beschichtung auf sowohl der ersten als auch der zweiten Membranoberfläche, kann die jeweilige Beschichtung unterschiedliche Eigenschaften aufweisen (beispielsweise unterschiedliche mittlere Größen der Nano-Flocken) oder unterschiedlicher Natur sein (z.B. im Material der Nano-Flocken variieren). Gleiches gilt grundsätzlich auch für unterschiedliche Lagen der Beschichtung.

Wie schon erwähnt, kann nach einer weiteren vorteilhaften Ausgestaltung der Erfindung bei einer erfindungsgemäßen Membran vorgesehen sein, dass die Beschichtung in Form einer Nano-Flocken Dispersion aufgebracht ist. Das Dispersionsmittel kann sich nach dem Aufbringen der Dispersion verflüchtigen, z.B. verdampfen. Auch ein Aushärten, Trocknen oder Verfestigen des Dispersionsmittels ist vorstellbar. Das Verflüchtigen, Aushärten, Trocknen oder Verfestigen des Dispersionsmittels kann verstärkt werden durch Beheizen der aufgebrachten Beschichtung, Applizieren eines Luft- oder Gasstroms auf die Beschichtung oder Bestrahlen der Beschichtung mit Strahlung geeigneter Wellenlänge. In der Nano-Flocken Dispersion stellen die Nano-Flocken die disperse Phase (dispergierte Phase) bereit. Je nach Größe der Nano-Flocken kann es sich um eine kolloidale Dispersion oder um eine grob disperse Dispersion handeln. Alternativ kann es sich auch um eine Nano-Flocken Suspension, insbesondere eine verwirbelte Nano-Flocken Suspension, handeln.

Nach einer weiteren vorteilhaften Ausgestaltung der Erfindung kann bei einer erfindungsgemäßen Membran vorgesehen sein, dass die Nano-Flocken Graphen oder eine Graphen-Verbindung, insbesondere Graphen-Oxid, umfassen. Wie durch den Terminus "umfassend" zum Ausdruck kommend, können die Nano-Flocken neben Graphen bzw. der Graphen-Verbindung noch weitere Bestandteile umfassen. Die Nanoflocken können auch Graphen und eine/oder mehrere Graphen-Verbindungen umfassen. Vorstellbar ist zudem, dass die Nano-Flocken unterschiedliche Graphen-Oxid-Verbindung umfassen. Graphen ist ein sich allein aus Kohlenstoffatomen zusammensetzendes Material, wobei die Kohlenstoffatome in einer Schicht in einem regelmäßigen hexagonalen Muster angeordnet sind. Jedes Kohlenstoffatom ist dabei von drei weiteren Kohlenstoffatomen unmittelbar benachbart, wobei die benachbarten Kohlenstoffatome in einem Winkel von 120° dazu angeordnet sind. Die Kohlenstoffatome liegen sp²-hybridisiert vor. Graphen lässt sich im Wege einer Top-down oder Bottom-up Fertigung herstellen. Graphen-Oxid ist ebenfalls aus einem Grundgerüst aus Kohlenstoffatomen aufgebaut, welches eine variable Menge an Punkt- und Lochdefekten innerhalb einer Kohlenstoff-Ebene aufweist. An das Kohlenstoff-Grundgerüst sind sauerstoffhaltige funktionelle Gruppen angebunden (z.B. Hydroxy- oder CarboxylGruppen). Der Terminus Graphen-Oxid bezieht sich also auf monolagige Graphen-Derivate mit sauerstoffhaltigen funktionellen Gruppen. Alternativ oder zusätzlich zu Graphen bzw. Graphen-Oxid können die Nano-Flocken auch anderweitige Materialien umfassen, z.B. Borophen, Gellenen, Germanen, Silicen oder Stanen, Graphan, Boronitren oder Germaniumphosphid. Auch Derivate (z. B Oxidverbindungen) der vorgenannten Materialien kommen in Betracht. Alternativ oder zusätzlich können die Nano-Flocken auch Tone, Lehme, und anderweitige zweidimensionale (2D) Materialien wie Bornitrid (h-BN) oder MXene (anorganische 2D Materialien). Gleichermaßen können auch Mischungen der vorgenannten Materialien die Nano-Flocken bereitstellen.

Nach einer weiteren vorteilhaften Ausgestaltung der Erfindung kann bei einer erfindungsgemäßen Membran vorgesehen sein, dass der Membrankörper auf einem Perfluorsulfonsäure- (PFSA) Polymer basiert. Bei dem genannten PFSA Polymer kann es sich beispielsweise um Nafion handeln. Genauer gesagt handelt es sich dabei um ein Copolymer aus Tetrafluorethylen und einem Sulfonylsäurefluorid-Derivat eines Perfluoralkylvinylethers. Besonders bevorzugt werden Nafion-Membranen in Brennstoffzellen eingesetzt und erfüllen dort die Aufgabe einer Polymer-Elektrolyt-Membran (PEM). Ferner kann der Membrankörper auch durch anderweitige Polymere wie Polystyrol-Sulfonsäure (PSSA), sulfoniertes Polyimid (PI) oder sulfoniertes Polyether-Ether-Kethon (s-PEEK) gebildet sein.

Nach einer weiteren vorteilhaften Ausgestaltung der Erfindung kann bei einer erfindungsgemäßen Membran vorgesehen sein, dass die Beschichtung im Wege einer Sprühbeschichtung oder Tauchbeschichtung auf den Membrankörper aufgebracht ist. In beiden Verfahren wird eine Nano-Flocken umfassende Flüssigkeit (Dispersion, Suspension oder dergleichen) auf den Membrankörper aufgebracht. Dies kann - wie erwähnt - auf beiden oder auf nur einer der Membranoberflächen erfolgen. Gleichsam können bestimmte Bereiche der ersten und/oder zweiten Membranoberfläche von der Beschichtung ausgenommen werden, z.B. durch Maskierung, Abdeckung oder entsprechende bereichsweise Ausführung des Beschichtungsverfahrens. Dem Beschichten kann eine Vorbehandlung des Membrankörpers vorgelagert sein. Dabei können die nicht zu beschichtenden Stellen z.B. maskiert oder abgedeckt werden (z.B. durch Aufbringen eines Schutzlacks). Ferner können dabei auf die zu beschichtenden Bereiche Haftmittler oder Haftverstärker für die Beschichtung aufgebracht werden. Auch eine mechanische Vorbehandlung der Membranoberfläche, z. B. durch eine Aufrauhung, ist möglich. Ferner kann der Membrankörper chemisch oder thermisch vorbehandelt werden.

Unter dem Verfahren des Sprühbeschichtens (spray coating) ist eine Zerstäubung einer Flüssigkeit samt darin enthaltener Partikel wie Nano-Flocken (somit auch einer Dispersion, Suspension oder dergleichen) in einen Sprühnebel zu verstehen, welcher sodann auf das zu beschichtende Substrat (hier den Membrankörper) geleitet wird. Das Verfahren des Sprühbeschichtens ist vorteilhaft, da sich damit Membranen auch im Serienmaßstab kostengünstig beschichten lassen. Zudem ist ein darauf basierender Prozess in besonders einfachem Maße skalierbar.

Beim Tauchbeschichten (dip coating) wird ein Substrat (hier den Membrankörper) in ein Beschichtungsmaterial (hier z.B. eine Dispersion oder verwirbelte Suspension von Nano-Flocken) getaucht und wieder herausgezogen. Beim Herausziehen bleibt ein Beschichtungsfilm auf dem Substrat zurück. Die Schichtdicke der Beschichtung lässt sich durch die Temperatur, den Umgebungsdruck, die Luftfeuchtigkeit, die Geschwindigkeit beim Eintauchen und Herausziehen des Substrats sowie durch den Ein- und Austauchwinkel des Substrats einstellen. Unabhängig vom Beschichtungsverfahren kann im Anschluss an die Beschichtung eine Nachbehandlung erfolgen. Als weitere Varianten zur Ausführung des Beschichtungsvorgangs seien das Bestreichen, Bepinseln, die Walzenbeschichtung oder das Drucken zu nennen.

Nach einer weiteren vorteilhaften Ausgestaltung der Erfindung kann bei einer erfindungsgemäßen Membran vorgesehen sein, dass die Membran eine semipermeable Membran, insbesondere eine Protonenaustausch-Membran, ist. Eine semipermeable Membran meint, dass die Membran für bestimmte Teilchen wie Moleküle, Ionen, Ladungen etc. durchlässig ist. Dabei kann sich die Durchlässigkeit auf eine bestimmte Eigenschaft der Teilchen beziehen, z.B. auf die Teilchengröße. So kann die Durchlässigkeit der Membran bzw. darin vorgesehener Kanäle oder Poren auf bestimmte Teilchengrößen beschränkt sein. Übersteigt die Teilchengröße also ein bestimmtes Maß, so ist es den Teilchen nicht möglich durch die Membran hindurchzutreten, während kleineren Teilchen ein Durchtritt ermöglicht ist. Es sei jedoch betont, dass die Selektions-Mechanismen in Bezug auf die Durchlässigkeit derartiger Membranen für bestimmte Teilchen, Ionen oder Moleküle noch nicht genau aufgeklärt sind. Bei einer mit Nano-Flocken beschichteten Membran können auch die Ladung, Bindungseigenschaften, Hydrophilie oder Hydrophobizität der auf die Membran aufgebrachten Nano-Flocken eine Rolle für die Durchlässigkeit spielen. Unter einer Protonenaustausch-Membran ist eine Membran zu verstehen, welche ein Hindurchtreten von H⁺ Ionen (H₃O⁺ Ionen, Protonen) ermöglicht. Wie eingangs beschrieben, kommt es bei den bekannten Protonenaustausch-Membranen (z.B. bei Verwendung in Brennstoffzellen) vermehrt zum "Crossover" ungewünschter Teilchen oder Moleküle, z.B. der eingesetzten Brennstoffmoleküle wie Methanol. Die vorliegende Erfindung schafft hier Abhilfe und erhöht die Selektivität in Bezug auf ein möglichst ausschließliches Hindurchtreten von Protonen (bei gleichzeitiger Reduktion von Crossover-Effekten). Die auf den Nano-Flocken basierende Beschichtung weist ein vom Porensystem des Membrankörpers abweichendes Porensystem (inklusive abweichender Porendurchmesser) auf. Entsprechend kann durch die Ausgestaltung des Porensystems der Beschichtung die Durchlässigkeit der Membran modifiziert werden, denn um die Membran zu passieren, müssen die Teilchen auch das Porensystem der Beschichtung durchdringen. Sind die mittleren Poren- oder Kanaldurchmesser in der Beschichtung kleiner als im Membrankörper, so können Crossover-Teilchenmigrationen durch die Membran reduziert oder gar verhindert werden. Die Porengröße in der Beschichtung kann maßgeschneidert an die jeweiligen Erfordernisse angepasst werden, was an späterer Stelle im Zusammenhang mit dem erfindungsgemäß vorgeschlagenen Verfahren noch genauer erläutert sei.

Wie erwähnt, betrifft die Erfindung nebst der Membran auch eine galvanische Zelle, umfassend eine Anode, eine Kathode und eine zwischen Anode und Kathode angeordnete Membran. Bei der Membran handelt es sich um die erfindungsgemäß vorgeschlagene Membran. Bei der galvanischen Zelle kann es sich um eine Primärzelle (Batterie), eine Sekundärzelle (Akkumulator) oder um eine Brennstoffzelle handeln. Die Membran kann dabei unmittelbar den Elektrolyten bereitstellen (PEM) oder eine Barriere zwischen einem Anoden- und Kathodenraum bereitstellen. Auch kann vorgesehen sein, dass die Membran als solche nicht als Elektrolyt, sondern lediglich als Barriere im Sinne einer semipermeablen Membran fungiert. In diesem Fall ist im Anoden- und Kathodenraum ein Elektrolyt vorgesehen. Die vorbeschriebenen Ausgestaltungen einer mit der Erfindung vorgeschlagenen Membran können ebenso vorteilhafte Ausgestaltungen einer mit der Erfindung vorgeschlagenen galvanischen Zelle sein.

Zuletzt betrifft die Erfindung ein Verfahren zur Herstellung einer nach der Erfindung ausgebildeten Membran. Dabei wird in einem ersten Verfahrensschritt a. ein Membrankörper bereitgestellt, der eine erste Membranoberfläche und eine der ersten Membranoberfläche gegenüberliegende zweite Membranoberfläche aufweist. Unter "Bereitstellen" kann in diesem Zusammenhang eine Fertigung des Membrankörpers zu verstehen sein, gleichsam aber auch eine anderweitige Bereitstellung, z.B. das Beziehen des Membrankörpers von einer Bezugsquelle. In einem Verfahrensschritt b. wird sodann eine auf Nano-Flocken basierende Beschichtung auf der ersten und/oder zweiten Membranoberfläche aufgebracht. Vorteilhaft kann dabei sein, die Beschichtung im Wege einer Sprühbeschichtung oder Tauchbeschichtung aufzubringen. Details hierzu wurden bereits vorangehend beschrieben.

Die Membran kann hinsichtlich ihrer Protonenleitfähigkeit und/oder Molekül- bzw. Ionenpermeabilität durch Einstellen einer Verfahrensbedingung angepasst werden. Unter einer Molekül- bzw. Ionenpermeabilität ist insbesondere die Durchlässigkeit in Bezug auf Moleküle bzw. Ionen zu verstehen, deren Durchtritt durch die Membran unerwünscht ist (Crossover-Teilchen). Bei der genannten Verfahrensbedingung kann es sich z.B. um eine thermische Behandlung des Membrankörpers und/oder der Beschichtung handeln. Unter einer thermischen Behandlung kann eine Temperatureinstellung zu verstehen sein, z.B. ein Beheizen oder Kühlen. Eine entsprechende Temperatureinstellung - beispielsweise beim Beschichten - kann einen Einfluss auf die Protonenleitfähigkeit bzw. Permeabilität der Beschichtung haben. Gleichsam kann dies durch eine Laserbehandlung der Beschichtung erfolgen, wodurch die Struktur des Porensystems der Beschichtung verändert werden kann. Ebenso kann die Protonenleitfähigkeit bzw. Permeabilität der Beschichtung durch eine Druckeinstellung beim Aufbringen der Beschichtung angepasst werden. Gleiches ist im Anschluss an das Aufbringen der Beschichtung möglich, beispielsweise durch entsprechende (mechanische) Kompression des mit der Beschichtung beaufschlagten Membrankörpers. Auch die Lösungsmittelauswahl beim Aufbringen der Beschichtung kann die Protonenleitfähigkeit bzw. Permeabilität der Beschichtung beeinflussen. Gleiches gilt für eine Auswahl bestimmter Beschichtungs-Verfahrensparameter. Auch können mehrere der vorgenannten Verfahrensbedingungen zur Anpassung Protonenleitfähigkeit und/oder Molekül- bzw. Ionenpermeabilität angepasst werden.

Folglich können durch eine Anpassung einer bestimmten Verfahrensbedingung die Porengrößen der Beschichtung eingestellt bzw. angepasst werden. Eine mögliche Anpassung kann eine Erhöhung der Protonenleitfähigkeit und eine Reduktion der Molekül- bzw. Ionenpermeabilität (bezogen auf Moleküle bzw. Ionen, welche die Membran nicht durchdringen sollen) betreffen. Somit kann bei einer in einer Brennstoffzelle eingesetzten Membran die Durchlässigkeit in Bezug auf Protonen (Protonenleitfähigkeit) im Vergleich zu anderweitigen Molekülen (z.B. Brennstoffmolekülen) oder Ionen selektiv erhöht werden.

Die genannte Selektivitätsanpassung kann gleichermaßen durch eine geeignete chemische Funktionalisierung (Anbindung funktioneller Gruppen) der Nano-Flocken erfolgen. Auch kann diese durch die Anpassung der Schichtdicke der auf der ersten und/oder zweiten Membranoberfläche aufgebrachten Beschichtung, eine Größeneinstellung der Nano-Flocken, und die Materialauswahl der Nano-Flocken vorgenommen werden.

Die vorbeschriebenen Ausgestaltungen einer mit der Erfindung vorgeschlagenen Membran und einer mit der Erfindung vorgeschlagenen galvanischen Zelle, können ebenso vorteilhafte Ausgestaltungen eines mit der Erfindung vorgeschlagenen Verfahrens zur Herstellung der Membran sein und umgekehrt.

Weitere Merkmale und Vorteile der Erfindung ergeben sich aus der nachfolgenden Beschreibung nicht einschränkend zu verstehender Ausführungsbeispiele der Erfindung, welche im Folgenden unter Bezugnahme auf die Zeichnungen näher erläutert werden. In diesen Zeichnungen zeigen schematisch:
- Fig. 1: eine Prinzipdarstellung einer aus dem Stand der Technik bekannten Brennstoffzelle auf Basis einer Polymerelektrolyt-Membran;
- Fig. 2: eine Seitenansicht eines ersten Ausführungsbeispiels einer erfindungsgemäßen Membran, bei welcher eine Beschichtung auf einer ersten Membranoberfläche aufgebracht ist;
- Fig. 3: eine Seitenansicht eines zweiten Ausführungsbeispiels einer erfindungsgemäßen Membran, bei welcher eine Beschichtung auf der ersten und einer zweiten Membranoberfläche aufgebracht ist;
- Fig. 4: eine Darstellung von Crossover-Effekten, auftretend bei einer mit einer Beschichtung versehenen Membran gemäß der Erfindung;
- Fig. 5: eine Darstellung von im Vergleich zur Darstellung nach Fig. 4 reduzierten Crossover-Effekten bei einer mit einer Beschichtung versehenen Membran gemäß der Erfindung.

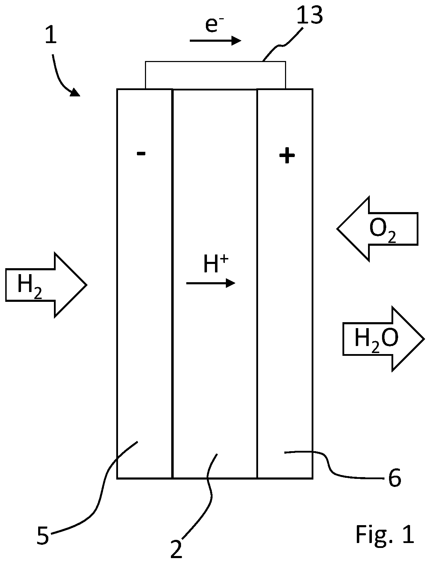

Die Fig. 1 zeigt eine Prinzipdarstellung einer Brennstoffzelle 1 auf Basis einer Polymerelektrolyt-Membran (sog. PEMFC). Bei der Brennstoffzelle 1 handelt es sich um ein Beispiel einer sog. Tertiärzelle, einem Spezialfalle einer galvanischen Zelle. Ersichtlich weist die Brennstoffzelle eine Anode 5 (Minus-Pol) und eine Kathode 6 (Plus-Pol) auf. Zwischen Anode 5 und Kathode 6 ist eine einen Membrankörper 2 aufweisende Membran angeordnet. Bei der Membran handelt es sich um eine Polymerelektrolyt-Membran. Zum Betrieb der Brennstoffzelle wird Wasserstoff H₂ oder ein wasserstoffhaltiges Gasgemisch auf die Anode 5 geleitet (siehe die Pfeildarstellung in Fig. 1). An der Anode wird der Wasserstoff elektrochemisch unter Abgabe von Elektronen e⁻ zu H⁺ Ionen (Protonen) oxidiert.

Durch die Membran erfolgt ein Transport der Protonen H⁺ von der Anode 5 in Richtung der Kathode 6. Die an der Anode 5 freigegebenen Elektronen e⁻ werden über eine elektrische Leitung 13 in Richtung der Kathode 6 geleitet. Der Kathode 6 wird Sauerstoff O₂ oder ein sauerstoffhaltiges Gasgemisch (z.B. Luft) zugeleitet, sodass dort eine Reduktion von Sauerstoff zu O²⁻ Ionen unter Aufnahme der Elektronen e⁻ erfolgt. Die O²⁻ Ionen verbinden sich mit den Protonen unter Bildung von Wasser H₂O. Die Brennstoffzelle kann eine Mehrzahl von derartigen Einheiten aus Anode, Kathode und Membran umfassen, die in sog. Stacks angeordnet sind.

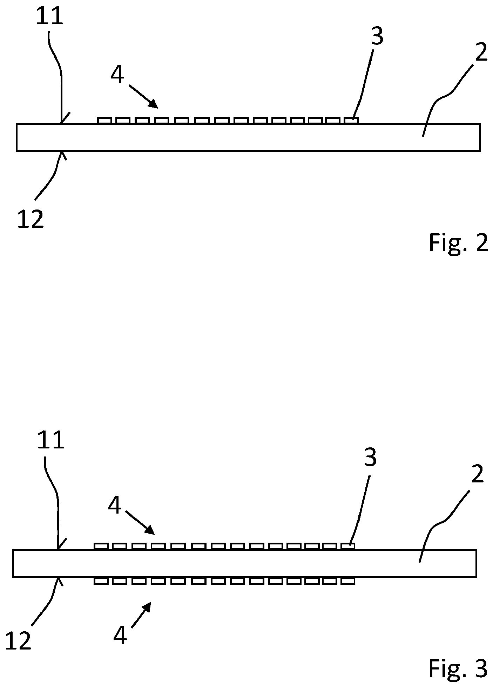

In der Fig. 2 ist in einer Seitenansicht eine schematische Darstellung einer erfindungsgemäßen Membran wiedergegeben. Die Membran umfasst ersichtlich einen Membrankörper 2, der z.B. aus Nafion gefertigt sein kann. Der Membrankörper 2 weist eine erste Membranoberfläche 11 und eine der ersten Membranoberfläche 11 gegenüberliegende zweite Membranoberfläche 12 auf. Auf der ersten Membranoberfläche 11 ist eine auf Nano-Flocken 3 basierende Beschichtung 4 aufgebracht. Vorzugsweise handelt es sich bei den Nano-Flocken 3 um 2D-Flocken, die z.B. Graphen oder Graphen-Oxid umfassen können. Im Gegensatz dazu sind gemäß dem Ausführungsbeispiel nach Fig. 3 beide Membranoberflächen 11, 12 mit der genannten Beschichtung 4 aus Nano-Flocken 3 versehen.

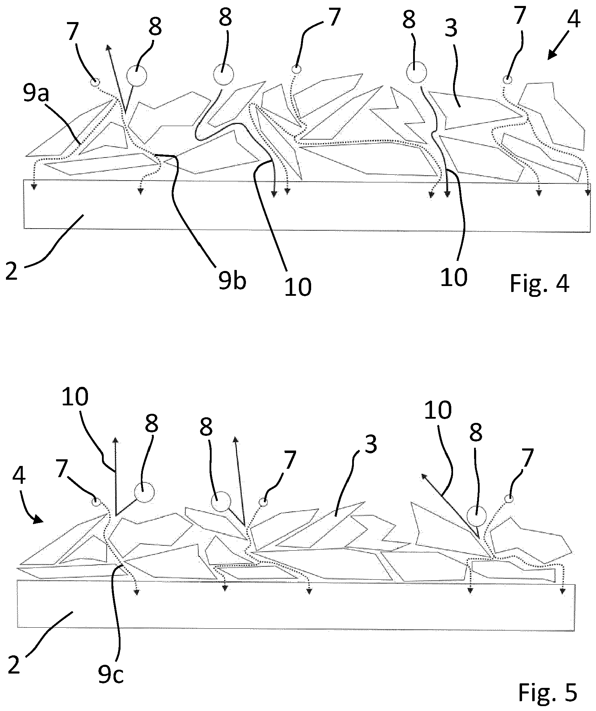

In der Fig. 4 ist der Durchtritt von H⁺ Ionen 7 durch eine mit einer Beschichtung 4 aus Nano-Flocken 3 beschichteten Membrankörper 2 (also eine Membran) illustriert. Gleichsam ist dargestellt, dass bestimmte Crossover-Teilchen 8 (z.B. Moleküle oder Ionen) durch die Beschichtung 4 hindurchtreten können. Die H⁺ Ionen 7 weisen einen geringeren Teilchendurchmesser auf als die Crossover-Teilchen 8. Mit den punktierten Pfeillinien sind beispielhaft unterschiedliche Bewegungspfade 9a, 9b für ein H⁺ Ion 7 durch die Beschichtung 4 mit Nano-Flocken 3 hindurch in Richtung des Membrankörpers 2 dargestellt. Auch weist die Beschichtung Bewegungspfade 10 für die Crossover-Teilchen 8 auf, die ebenfalls durch die Beschichtung 4 hindurchtreten können.

Da der Durchtritt von Crossover-Teilchen 8, durch eine in Brennstoffzellen 1 verwendete Membran, jedoch mit diversen Nachteilen betreffend die Leistungsfähigkeit der Brennstoffzelle 1 verbunden ist (siehe die vorangehenden Ausführungen), ist der Durchtritt von Crossover-Teilchen 8 durch die Membran unerwünscht. Durch geeignete Anpassung der Beschichtung 4 können Bewegungspfade 10 für Crossover-Teilchen 8 in der Beschichtung 4 geschlossen bzw. versperrt werden (z.B. durch eine Reduktion der Porendurchmesser). Dadurch wird der Anteil an durch den Membrankörper 2 samt Beschichtung 4 hindurchtretenden Crossover-Teilchen 8 reduziert. Die Crossover-Teilchen prallen
- wie in der Fig. 5 - gezeigt sodann an der Beschichtung 4 ab. Gleichsam können die H⁺ Ionen 7 weiterhin in ausreichendem Maße durch die Beschichtung 4 hindurchtreten.

### Hinweis auf Förderung

Das zu dieser Anmeldung führende Projekt wurde im Rahmen des Programms INNO-KOM vom Bundesministerium für Wirtschaft und Energie gefördert (FKZ: 49VF170038)" .

### Bezugszeichenliste

- 1: Brennstoffzelle
- 2: Membrankörper
- 3: Nano-Flocke
- 4: Beschichtung
- 5: Anode
- 6: Kathode
- 7: H⁺ Ion (Proton)
- 8: Crossover-Teilchen
- 9a: Bewegungspfad
- 9b: Bewegungspfad
- 9c: geänderter Bewegungspfad
- 10: Bewegungspfad
- 11: erste Membranoberfläche
- 12: zweite Membranoberfläche
- 13: elektrische Leitung
- H⁺: Proton
- H₂: Wasserstoff
- O₂: Sauerstoff
- H₂O: Wasser
- e⁻: Elektron

## Patentansprüche

1. Membran zur Verwendung in einer galvanischen Zelle (1), mit einem Membrankörper (2), der eine erste Membranoberfläche (11) und eine der ersten Membranoberfläche (11) gegenüberliegende zweite Membranoberfläche (12) aufweist, **dadurch gekennzeichnet, dass** auf der ersten und/oder zweiten Membranoberfläche (11, 12) eine auf Nano-Flocken (3) basierende Beschichtung (4) aufgebracht ist.

2. Membran nach Anspruch 1, **dadurch gekennzeichnet, dass** die Beschichtung (4) vollflächig oder bereichsweise auf die erste und/oder zweite Membranoberfläche (11, 12) aufgebracht ist.

3. Membran nach Anspruch 1 oder 2, **dadurch gekennzeichnet, dass** es sich bei den Nano-Flocken (3) um 2D-Flocken handelt.

4. Membran nach einem der vorangehenden Ansprüche, **dadurch gekennzeichnet, dass** die Beschichtung (4) eine oder mehrere Lagen umfasst.

5. Membran nach einem der vorangehenden Ansprüche, **dadurch gekennzeichnet, dass** die Beschichtung (4) in Form einer Nano-Flocken (3) Dispersion aufgebracht ist.

6. Membran nach einem der vorangehenden Ansprüche, **dadurch gekennzeichnet, dass** die Nano-Flocken (3) Graphen oder eine Graphen-Verbindung, insbesondere Graphen-Oxid, umfassen.

7. Membran nach einem der vorangehenden Ansprüche, **dadurch gekennzeichnet, dass** der Membrankörper (2) auf einem Perfluorsulfonsäure- (PFSA) Polymer basiert.

8. Membran nach einem der vorangehenden Ansprüche, **dadurch gekennzeichnet, dass** die Beschichtung (4) im Wege einer Sprühbeschichtung oder Tauchbeschichtung auf den Membrankörper (2) aufgebracht ist.

9. Membran nach einem der vorangehenden Ansprüche, **dadurch gekennzeichnet, dass** die Membran eine semipermeable Membran, insbesondere eine Protonenaustausch-Membran, ist.

10. Galvanische Zelle, umfassend eine Anode (5), eine Kathode (6) und eine zwischen Anode (5) und Kathode (6) angeordnete Membran, **dadurch gekennzeichnet, dass** es sich um eine Membran nach einem der Ansprüche 1 bis 9 handelt.

11. Galvanische Zelle nach Anspruch 10, **dadurch gekennzeichnet, dass** es sich bei der galvanischen Zelle um eine Primärzelle, eine Sekundärzelle oder um eine Brennstoffzelle handelt.

12. Verfahren zur Herstellung einer nach einem der Ansprüche 1 bis 9 ausgebildeten Membran, umfassend die folgenden Schritte:
a. Bereitstellen eines Membrankörpers (2), der eine erste Membranoberfläche (11) und eine der ersten Membranoberfläche (11) gegenüberliegende zweite Membranoberfläche (12) aufweist;
b. Aufbringen einer auf Nano-Flocken (3) basierenden Beschichtung (4) auf der ersten und/oder zweiten Membranoberfläche (11, 12).

13. Verfahren nach Anspruch 12, **dadurch gekennzeichnet, dass** die Beschichtung (4) im Wege einer Sprühbeschichtung oder Tauchbeschichtung aufgebracht wird.

14. Verfahren nach Anspruch 12 oder 13, **dadurch gekennzeichnet, dass** die Membran hinsichtlich ihrer Protonenleitfähigkeit und/oder Molekül- bzw. Ionenpermeabilität durch Einstellen eines Verfahrensbedingung anpassbar ist, wobei die Verfahrensbedingung eine thermische Behandlung des Membrankörpers (2) und/oder der Beschichtung (4), eine Laserbehandlung der Beschichtung (4), eine Druckeinstellung beim Aufbringen der Beschichtung (4), einer im Anschluss an das Aufbringen der Beschichtung (4) ausgeführten Kompression des beschichteten Membrankörpers (2), eine Lösungsmittelauswahl beim Aufbringen der Beschichtung (4), eine Auswahl von Beschichtungs-Verfahrensparametern oder mehrere der vorgenannten Verfahrensbedingungen betrifft.
